# EUROPÄISCHE PATENTSCHRIFT

(11) **EP 3 189 524 B1**
(45) Veröffentlichungstag und Bekanntmachung des Hinweises auf die Patenterteilung: **11.07.2018**
(21) Anmeldenummer: 15790855.9
(22) Anmeldetag: 19.10.2015
(51) Int. Cl.: H01B 3/40, H02K 3/30, C08K 5/1525, C08G 59/68, C08L 63/00

(54) **LEITERANORDNUNG, ELEKTRISCHE SPULE UND ELEKTRISCHE MASCHINE**
CONDUCTOR ARRANGEMENT, ELECTRICAL COIL AND ELECTRICAL MACHINE
ENSEMBLE DE CONDUCTEURS, BOBINE ÉLECTRIQUE ET MACHINE ÉLECTRIQUE

(30) Priorität: 24.10.2014 DE 102014221715
(43) Veröffentlichungstag der Anmeldung: 12.07.2017
(73) Patentinhaber: Siemens Aktiengesellschaft, 80333 München (DE)
(72) Erfinder: HUBER, Jürgen, 91058 Erlangen (DE); KLAUSSNER, Bernhard, 90408 Nürnberg (DE); SCHIRM, Dieter, 96149 Breitengüßbach (DE); ÜBLER, Matthias, 92289 Ursensollen (DE)
(86) Internationale Anmeldenummer: PCT/EP2015/074079
(87) Internationale Veröffentlichungsnummer: WO 2016/062643

(56) Entgegenhaltungen:
- DE-A1-102009 039 456
- US-A- 5 982 056
- US-A1- 2003 191 256
- US-A1- 2009 230 360
- US-A1- 2010 297 453

## Beschreibung

Die Erfindung betrifft ein Tränkharz, insbesondere ein katalytisch härtbares Tränkharz für den Isolationsaufbau einer elektrischen Maschine, umfassend mindestens ein Reaktionsharz vermischt mit mindestens einem reaktiven Verdünner und einem Härtungskatalysator insbesondere für eine kationische, anionische oder koordinative Polymerisation des Tränkharzes. Die Erfindung betrifft weiterhin eine Leiteranordnung sowie eine elektrische Spule und eine elektrische Maschine mit einer solchen Leiteranordnung.

Elektrische Maschinen, insbesondere rotierende elektrische Maschinen, beinhalten eine elektrische Wicklung innerhalb eines Blechpakets. Diese besteht aus elektrischen Leitern (die ggf. bereits mit einer Primärisolation versehen sind) und festen Isolationswerkstoffen als Hauptisolation. Ohne weitere Maßnahmen gibt es zwischen dem Blechpaket, den Leitern und der Hauptisolation keine innige Verbindung, so dass Spalten und Hohlräume entstehen. Bei Betrieb unter atmosphärischen Bedingungen, wären diese Bereiche mit Luft gefüllt. Insbesondere bei Anwendungen im Hochspannungsbereich ist dies nicht zulässig, da elektrische Teilentladungen die Isolation in kürzester Zeit zerstören würden. Dies führt zum Ausfall der elektrischen Maschine.

Um eine innige Verbindung und somit das Verdrängen von Luft zu bewirken, wird die Wicklung mittels eines härtbaren Tränkharzes oder Tränklackes imprägniert. Die festen Isolationswerkstoffe können dabei porös ausgeführt sein, um die Tränkharzaufnahme zu erhöhen. Beispiele hierfür sind Glimmerbänder, Isolationspapiere oder Vliesstoffe.

Für die Imprägnierung von Hochspannungsmaschinen sind Mischungen aus Epoxyd-Harzen und flüssigen, cycloaliphathischen Säureanhydriden Stand der Technik, siehe z.B. US 4113791 (A). Die Säureanhydride dienen hierbei als Härter für eine Polyaddition mit einem Epoxyd-Harz und setzen gleichzeitig die Viskosität herab, was einer zügigen und vollständigen Imprägnierung zu Gute kommt.

Säureanhydride sind aber in der Regel sensibilisierend wirkende Verbindungen, speziell bei Aufnahme über die Atemwege. Aus diesem Grund sind beim Umgang mit Säureanhydriden entsprechende Sicherheitsmaßnahmen zwingend notwendig.

Der Erfindung liegt die Aufgabe zugrunde, ein Tränkharz mit verbesserten Eigenschaften für eine Leiteranordnung einer elektrischen Maschine zu Verfügung zu stellen.

Die Aufgabe wird erfindungsgemäß gelöst durch ein Tränkharz, insbesondere ein katalytisch härtbares Tränkharz für die Leiter einer elektrischen Maschine, umfassend mindestens ein Reaktionsharz vermischt mit mindestens einem reaktiven Verdünner und einem Härtungskatalysator, der zumindest ein Imidazol oder eine Imidazol-Verbindung umfasst, wobei das Reaktionsharz zumindest eine Oxiranfunktionalität aufweist.

Die Aufgabe wird weiterhin erfindungsgemäß gelöst durch eine Leiteranordnung aus einer Anzahl von Leitern, wobei um die Anzahl von Leitern eine Hauptisolation vorgesehen ist, die mittels eines derartigen Tränkharzes imprägniert ist. Die Hauptisolation ist hierbei insbesondere aus festen, porösen Isolationswerkstoffen wie z.B. Glimmerbändern, Isolationspapieren oder Vliesstoffen.

Die Aufgabe wird zudem erfindungsgemäß gelöst durch eine elektrische Spule mit einer derartigen Leiteranordnung.

Die Aufgabe wird schließlich erfindungsgemäß gelöst durch eine elektrische Maschine mit einer derartigen Leiteranordnung. Die in Bezug auf das Tränkharz nachstehend angeführten Vorteile und bevorzugten Ausgestaltungen lassen sich sinngemäß auf die Leiteranordnung, die elektrische Spule und die elektrische Maschine übertragen.

Unter Härtungskatalysator wird hierbei eine Verbindung verstanden, die eine kationische, anionische oder koordinative Polymerisation des Tränkharzes ermöglicht. Es können verschiedene Härtungskatalysatoren eingesetzt werden, wobei der Anteil an flüchtigen Säureanhydriden aus den eingangs genannten Gründen so gering wie möglich gehalten wird.

Insbesondere können als kationische Härtungskatalysatoren beispielsweise organische Salze zum Einsatz kommen. Beispielsweise können diese organischen Salze Verbindungen wie organische Ammonium-, Sulphonium-, Phosphonium-, oder Imidazolium-salze umfassen. So ist beispielsweise 2-Butylentetramethylene sulfonium hexafluoroantimonat ein möglicher kationischer Härtungskatalysator.

Metall-Komplex-Verbindungen, also Verbindungen mit einem oder mehreren Metall-Zentralatomen, die Liganden, beispielsweise organische Liganden koordinativ gebunden haben, können auch zusätzlich als Härtungskatalysator, als koordinative, als kationische oder als anionische Härtungskatalysatoren eingesetzt werden. Die Metall-Komplex-Verbindungen können geladen oder ungeladen sein und können entsprechende Gegenionen enthalten.

Als anionische Härtungskatalysatoren werden beispielsweise auch tertiäre Amine neben den Imidazol-Verbindungen eingesetzt. Beispielhaft genannt sei hier 4,5-Dihydroxymethyl-2-phenylimidazol und/oder 2-Phenyl-4-methyl-5-hydroxymethylimidazol.

Gegenüber den bekannten Säureanhydrid-Härtungskatalysatoren haben die hier genannten Härtungskatalysatoren den Vorteil dass sie eine geringere Feuchtigkeitsempfindlichkeit aufweisen und/oder toxikologisch weniger bedenklich sind.

Nach einer vorteilhaften Ausführungsform wird ein Härtungskatalysator in einer Menge im Bereich von 0,001 bis 10 Gew% in dem Tränkharz bei der Imprägnierung enthalten sein.

Dabei kann der Härtungskatalysator sowohl in dem lagerfähigen Tränkharz, also auch in dem zu imprägnierenden festen, porösen Isolationswerkstoff, wie beispielsweise in Glimmerbändern, isolationspapieren oder Vliesstoffen lagernd enthalten sein.

Eine Ausführungsform, bei der der Härtungskatalysator im porösen Isolationswerkstoff enthalten ist und das Tränkharz ohne Härtungskatalysator gelagert wird, ist besonders bevorzugt, weil durch das Fehlen des Härtungskatalysators im Tränkharz dessen Lagerstabilität enorm gesteigert werden kann. Außerdem wurden keine besonderen Wechselwirkungen des Härtungskatalysators mit dem porösen Isolationswerkstoff festgestellt.

Als reaktiver Verdünner können bekannte, handelsübliche Reaktivverdünner eingesetzt werden. Beispielsweise kann auch ein Reaktivverdünner mit einem heterocyclischen Vierring eingesetzt werden, beispielsweise mit einem Sauerstoff als Heteroatom, also einem Oxetan. Beispielhaft genannt seien dabei 3-Ethyl-3-hydroxymethyloxetan, 3-Ethyl-3-[(2-ethylhexyloxy)methyl]oxetan; und/oder 3-Ethyl-3-{[(3-ethyloxetane-3-yl)methoxy]methyl}oxetane.

Der Reaktivverdünner kann in einer Menge von beispielsweise 0,01 bis 50 Gew% insbesondere von 0,01 bis 10 Gew% im Tränkharz enthalten sein.

Durch die Menge an Reaktivverdünner kann beispielsweise ein das rheologische Verhalten des Tränkharzes eingestellt werden, da die Oxetane niedrige Viskositäten des Tränkharzes erzeugen. Die hier genannten Oxetane bewirken beispielsweise auch eine gute Vakuumfestigkeit des Tränkharzes, auch bei höheren Temperaturen, weil die Oxetane einen niedrigen Dampfdruck aufweisen.

Vorteilhafterweise enthält das Tränkharz zudem mindestens einen organischen und/oder anorganischen nanoskaligen Füllstoff. Die Nanopartikel, die auch in Form einer Mischung verschiedener nanoskaliger Füllstoffe vorliegen können, verbessern insbesondere die Schlagzähigkeit, das Delaminationsverhalten, die Rissanfälligkeit und die Teilentladungsbeständigkeit des gehärteten Tränkharzes.

Beispielsweise wird als Reaktivverdünner 3-Ethyl-3-{[(3-ethyloxetan-3-yl)methoxy]methyl}oxetan in einem Glycidyletherharz, insbesondere in destilliertem Bisphenol-F-diglycidylether (BFDGE) eingesetzt. Vorteilhafterweise wird dabei eine Menge von bis zu 5% des Reaktivverdünners in destilliertem BFDGE eingesetzt.

In Tests konnte dabei eine Glasübergangstemperatur einer für 10 Stunden bei 145°C gehärteten Probe aus 96 Gew% destilliertem BFDGE, 2 Gew.-% 1,2-Dimethylimidazol und 2 Gew.-% OXT-221 von 149°C erreicht werden.

Weiterhin von Vorteil ist, dass das Tränkharz mindestens einen organischen und/oder anorganischen mikroskaligen Füllstoff also einen Füllstoff mit einer durchschnittlichen Partikelgröße im Mikrometerbereich oder eine mikroskalige Füllstoffmischung enthält. Denkbar ist auch eine Mischung von mikroskaligen Füllstoffen. Solche Füllstoffe bewirken eine Erhöhung der mechanischen Festigkeit.

Nach einer bevorzugten Ausführungsform liegt die Endhärtungstemperatur des Tränkharzes im Bereich von 120 bis 190°C, bevorzugt im Bereich von 130°C bis 170°C. Dazu werden entsprechende Härtungskatalysatoren mit einem geeigneten Reaktivharz umgesetzt.

Ein solches Tränkharz ist für den Einsatz in elektrische Maschinen, insbesondere für rotierende elektrische Maschinen und Hochspannungsanwendungen vorgesehen. Das Reaktionsharz kann hierbei ein beliebiges Reaktionsharz mit Oxiranfunktionalitäten oder eine Mischung verschiedener Reaktionsharze mit Oxiranfunktionalitäten sein.

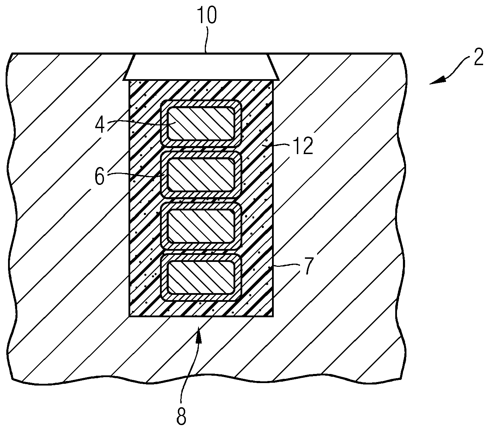

Ein Ausführungsbeispiel der Erfindung wird anhand einer Zeichnung näher erläutert. Hierin zeigt die einzige Figur eine Leiteranordnung 2 umfassend mehrere Leiter 4, die jeweils eine Primärisolation 6 aufweisen (z.B. aus Glimmerbändern, Drahtlack, Polyimid-Folie). Die Leiteranordnung 2 ist in einer Nut 7 eines Blechpakets 8 angeordnet, deren Öffnung durch einen Nutverschluss 10 verschlossen ist.

Die Nut 7 ist zudem mit einer Hauptisolation 12 ausgefüllt. Die Hauptisolation 12 ist imprägniert mit einem Tränkharz, welches mindestens ein Reaktionsharz vermischt mit mindestens einem reaktiven Verdünner und einem Härtungskatalysator enthält, wobei der reaktive Verdünner einen heterocyclischen Vierring enthält. Hierbei wird durch das Tränkharz die Luft in der Nut 7 verdrängt. Die Hauptisolation 12 weist einen porösen Werkstoff, insbesondere einen Isolationswerkstoff auf und der Härtungskatalysator für das Tränkharz ist in den porösen Werkstoff enthalten.

Die Leiteranordnung 2 ist Teil einer hier nicht näher gezeigten elektrischen Spule. Die elektrische Spule ist wiederum in einer elektrischen Maschine eingebaut. Alternativ ist die Leiteranordnung 2 in der elektrischen Maschine eingebaut, ohne Teil einer elektrischen Spule zu sein.

Die Erfindung betrifft ein Tränkharz, insbesondere ein katalytisch härtbares Tränkharz für die Leiter einer elektrischen Maschine, umfassend mindestens ein Reaktionsharz vermischt mit mindestens einem reaktiven Verdünner und einem Härtungskatalysator insbesondere für eine anionische Polymerisation des Tränkharzes, wobei zur Verbesserung der Eigenschaften des Tränkharz bei seinem Einsatz der reaktive Verdünner einen heterocyclischen Vierring enthält. Das Tränkharz ist Teil einer Hauptisolation (12) der Leiteranordnung (2), die wiederum in einer elektrischen Spule oder allgemein in einer elektrischen Maschine eingebaut ist.

## Patentansprüche

1. Leiteranordnung (2) aus einer Anzahl von Leitern, wobei um die Anzahl von Leitern eine Hauptisolation (12) vorgesehen ist, die mittels eines Tränkharzes, das ein katalytisch härtbares Tränkharz ist und mindestens ein Reaktionsharz vermischt mit mindestens einem reaktiven Verdünner und einem Härtungskatalysator umfasst, imprägniert ist, wobei im Tränkharz eine Imidazol-Verbindung enthalten ist und der reaktive Verdünner einen heterocyclischen Vierring aufweist.

2. Leiteranordnung nach Anspruch 1, wobei der heterocyclische Vierring ein Oxetan ist.

3. Leiteranordnung nach Anspruch 2, wobei das Oxetan ein 3-Ethyl-3-hydroxymethyloxetan, 3-Ethyl-3-[(2-ethylhexyloxy)methyl]oxetan; und/oder 3-Ethyl-3-{[(3-ethyloxetane-3-yl)methoxy]methyl}oxetane umfasst.

4. Leiteranordnung nach einem der vorhergehenden Ansprüche, wobei der Anteil des heterocyclischen Vierrings im reaktiven Verdünner des Tränkharzes zwischen 0,01 Gew.% und 50 Gew.%, insbesondere zwischen 0,01 Gew.% und 10 Gew.% liegt.

5. Leiteranordnung nach einem der vorhergehenden Ansprüche, wobei der Härtungskatalysator eine anionische Härtungsreaktion des Tränkharzes initiiert und tertiäre Amine und/oder Imidazol-Verbindungen als anionische Härtungskatalysatoren vorliegen.

6. Leiteranordnung nach einem der vorhergehenden Ansprüche, wobei im Tränkharz mindestens ein organischer und/oder anorganischer nanoskaliger Füllstoff vorliegt.

7. Leiteranordnung nach einem der vorhergehenden Ansprüche, wobei im Tränkharz mindestens ein organischer und/oder anorganischer mikroskaligen Füllstoff vorliegt.

8. Leiteranordnung (2) nach einem der vorhergehenden Ansprüche,
wobei die Hauptisolation (12) einen porösen Werkstoff aufweist und der Härtungskatalysator für das Tränkharz in den porösen Werkstoff enthalten ist.

9. Elektrische Spule mit einer Leiteranordnung (2) nach einem der Ansprüche 1 bis 8.

10. Elektrische Maschine, insbesondere rotierende elektrische Maschine, mit einer Leiteranordnung (2) nach einem der Ansprüche 1 bis 9.

## Claims

1. Conductor arrangement (2) composed of a number of conductors, the number of conductors being surrounded by a main insulation (12) impregnated by means of an impregnating resin which is a catalytically curable impregnating resin and comprises at least one reactive resin mixed with at least one reactive diluent and a curing catalyst, wherein the impregnating resin comprises an imidazole compound and the reactive diluent has a heterocyclic four-membered ring.

2. Conductor arrangement according to Claim 1, wherein the heterocyclic four-membered ring is an oxetane.

3. Conductor arrangement according to Claim 2, wherein the oxetane is a 3-ethyl-3-hydroxymethyloxetane, 3-ethyl-3-[(2-ethylhexyloxy)methyl]oxetane; and/or 3-ethyl-3-{[(3-ethyloxetan-3-yl)methoxy]methyl}oxetanes.

4. Conductor arrangement according to any of the preceding claims,
wherein the fraction of the heterocyclic four-membered ring in the reactive diluent of the impregnating resin is between 0.01 wt% and 50 wt%, more particularly between 0.01 wt% and 10 wt%.

5. Conductor arrangement according to any of the preceding claims,
wherein the curing catalyst initiates an anionic curing reaction of the impregnating resin and tertiary amines and/or imidazole compounds are present as ionic curing catalysts.

6. Conductor arrangement according to any of the preceding claims,
wherein at least one organic and/or inorganic nanoscale filler is present in the impregnating resin.

7. Conductor arrangement according to any of the preceding claims,
wherein at least one organic and/or inorganic microscale filler is present in the impregnating resin.

8. Conductor arrangement (2) according to any of the preceding claims,
wherein the main insulation (12) has a porous material and the curing catalyst for the impregnating resin is included in the porous material.

9. Electrical coil comprising a conductor arrangement (2) according to any of Claims 1 to 8.

10. Electrical machine, more particularly rotating electrical machine, having a conductor arrangement (2) according to any of Claims 1 to 9.

## Revendications

1. Ensemble de conducteurs (2) constitué d'un certain nombre de conducteurs, dans lequel autour du certain nombre de conducteurs est prévu un isolant principal (12), lequel est imprégné au moyen d'une résine d'imprégnation qui est une résine d'imprégnation durcissable catalytiquement et comporte au moins une résine réactionnelle mélangée avec au moins un diluant réactif et un catalyseur de durcissement, dans lequel un composé imidazole est contenu dans la résine d'imprégnation et le diluant réactif comprend un noyau hétérocyclique à quatre chaînons.

2. Ensemble de conducteurs selon la revendication 1, dans lequel le noyau hétérocyclique à quatre chaînons est un oxétane.

3. Ensemble de conducteurs selon la revendication 2, dans lequel l'oxétane comporte un 3-éthyl-3-hydroxyméthyloxétane, un 3-éthyl-3-[(2-éthylhexyloxy)méthyl]oxétane; et/ou un 3-éthyl-3-{[(3-éthyloxétane-3-yl)méthoxy]méthyl}oxétane.

4. Ensemble de conducteurs selon l'une des revendications précédentes, dans lequel la proportion du noyau hétérocyclique à quatre chaînons dans le diluant réactif de la résine d'imprégnation est comprise entre 0,01 % en poids et 50 % en poids, en particulier entre 0,01 % en poids et 10 % en poids.

5. Ensemble de conducteurs selon l'une des revendications précédentes, dans lequel le catalyseur de durcissement amorce une réaction de durcissement anionique de la résine d'imprégnation et des composés amine tertiaire et/ou imidazole sont présents en tant que catalyseurs de durcissement anionique.

6. Ensemble de conducteurs selon l'une des revendications précédentes, dans lequel au moins une charge nanométrique organique et/ou inorganique est présente dans la résine d'imprégnation.

7. Ensemble de conducteurs selon l'une des revendications précédentes, dans lequel au moins une charge micrométrique organique et/ou inorganique est présente dans la résine d'imprégnation.

8. Ensemble de conducteurs (2) selon l'une des revendications précédentes,
dans lequel l'isolant principal (12) comprend un matériau poreux et le catalyseur de durcissement pour la résine d'imprégnation est contenu dans le matériau poreux.

9. Bobine électrique avec un ensemble de conducteurs (2) selon l'une des revendications 1 à 8.

10. Machine électrique, en particulier machine électrique rotative, avec un ensemble de conducteurs (2) selon l'une des revendications 1 à 9.
